# EUROPEAN PATENT APPLICATION

(11) **EP 4 591 995 A1**
(43) Date of publication of application: **30.07.2025**
(21) Application number: 24860373.0
(22) Date of filing: 27.08.2024
(51) Int. Cl.: B05C 5/02, B05C 11/10, B05C 11/02, H01M 4/04

(54) **SLOT DIE WITH DIVIDED MANIFOLD**

(30) Priority: 29.08.2023 KR 20230113882
(71) Applicant: LG Energy Solution, Ltd., Seoul 07335 (KR)
(72) Inventor: CHAE, Hyeong Geun, Daejeon 34122 (KR); CHOI, Paul, Daejeon 34122 (KR); BAK, So Yeong, Daejeon 34122 (KR); PARK, Seung Seo, Daejeon 34122 (KR); JANG, Ji Woong, Daejeon 34122 (KR); YOON, Han Ju, Daejeon 34122 (KR); JEON, Shin Wook, Daejeon 34122 (KR); AHN, Byoung Hoon, Daejeon 34122 (KR); CHOI, Hyun Woo, Daejeon 34122 (KR)
(74) Representative: Plasseraud IP
(86) International application number: PCT/KR2024/012777
(87) International publication number: WO 2025/048453

(57) **Abstract**

A slot die includes a first body having a plurality of manifolds divided to independently accommodate an electrode slurry in isolation from each other, a second body pressurized engaged to the first body to maintain a sealing of the plurality of manifolds, and a coater shim tightly interposed between the first body and the second body to form a plurality of slits in communication with the plurality of manifolds between the coupling surfaces of the first body and the second body.

## Description

### [Cross-Reference to Related Applications]

The present application is a national phase entry of International Application No. PCT/KR2024/012777, filed on August 27, 2024, which claims priority from Korean Patent Application No. 10-2023-0113882, filed on August 29, 2023, all of which are incorporated herein by reference.

### [Technical Field]

The present disclosure relates to a slot die for applying an active material on a current collector for a secondary battery.

### [Background]

As technology development and demand for mobile devices increases, the demand in secondary batteries is also rapidly increasing. Among them, lithium secondary batteries are widely used as an energy source for various electronic products as well as mobile devices because of the high energy density, high operating voltage, and excellent preservation and lifespan characteristics.

Lithium secondary batteries utilize electrodes with an active material layer and an insulating layer formed on the surface of the current collector. Such an electrode is manufactured by using a coating device such as a slot die, applying an electrode slurry including an active material, etc. and an insulating liquid including an insulating material, etc. to the surface of the current collector and drying it.

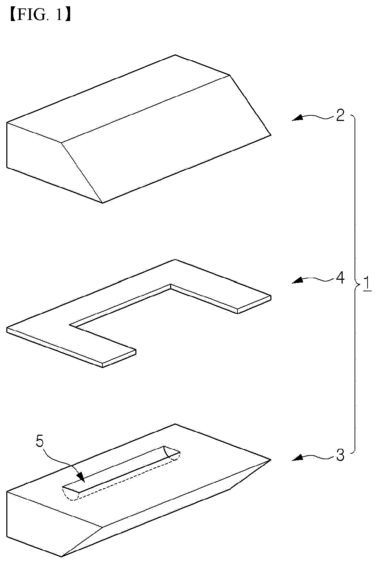

FIG. 1 illustrates a conventional slot die 1 for applying an electrode slurry. The slot die 1 includes an upper block 2 and a lower block 3, and a coater shim 4 is interposed between the upper block 2 and the lower block 3, and a plurality of bolt members engage to mutually couple them. The lower block 3 is provided with a manifold 5 having a concave space for accommodating the electrode slurry, the manifold 5 is connected by a pipe with an external electrode slurry supply (not shown).

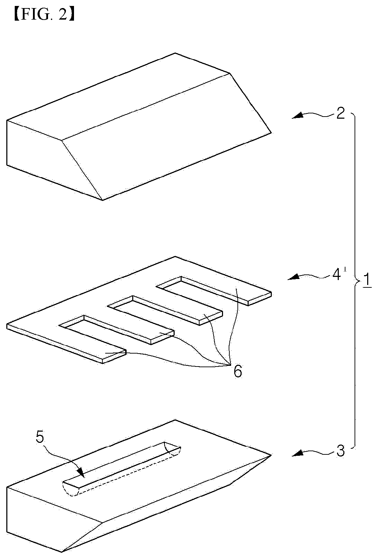

The slot die 1 exemplarily shown in FIG. 1 is a single lane type in which the electrode slurry is discharged in a single line. In contrast, FIG. 2 exemplarily shows a slot die 1' of a multi-lane type in which the electrode slurry is discharged in a plurality of rows. The coater shim 4' provided in the slot die 1' of FIG. 2 has a plurality of branches 6 extending across the manifold 5 as well as on both sides of the manifold 5. Accordingly, a plurality of lanes is formed between the branches 6 protruding from the front end of the manifold 5.

However, in a multi-lane type slot die such as FIG. 2, there is a problem that it is difficult to maintain a uniform amount of electrode slurry discharged separately from each other between the lanes. This is caused by the flow pressure of the electrode slurry acting on each lane, bending or distortion of the slot die due to its large size, deviation in installation of the coater shim by different operators, etc. In this manner, deviations in the discharge amount of electrode slurry for each lane cause localized unevenness in the coating loading amount and coating width of the current collector, resulting in negative impacts on the quality of the secondary battery.

### [Summary]

### [Technical Problem]

An object of the present disclosure is to enable uniformly forming a coating amount and coating width across all lanes of a slot die.

In addition, another object of the present disclosure is to address the problem of deviations in the installation of a coater shim by different operators.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a slot die, in one example, which includes a first body having a plurality of manifolds divided to independently accommodate an electrode slurry in isolation from each other, a second body engaged to the first body to maintain a pressurized sealing of the plurality of manifolds, and a coater shim tightly interposed between the first body and the second body to form a plurality of slits in communication with the plurality of manifolds between the coupling surfaces of the first body and the second body.

In the slot die of the present disclosure, the plurality of slits are allocated to each manifold to be in communication with any one manifold of the plurality of manifolds.

In one embodiment of the present disclosure, the coater shim may include a base shim sealing the rear end and both sides of the plurality of manifolds, and a plurality of spacer shims disposed spaced apart to form the plurality of slits in the front end of the plurality of manifolds.

Here, some of the plurality of spacer shims may be disposed corresponding to at least one or more partition walls isolating the plurality of manifolds from each other.

The slot die of the present disclosure includes a slurry pipe for supplying slurry to the plurality of manifolds, wherein the slurry pipe includes a main pipe comprising a single pipe, a buffer pipe accommodating a predetermined volume of electrode slurry supplied from the main pipe, a plurality of branch pipes branched and connected from the buffer pipe to correspond to a number of the plurality of manifolds, and a plurality of flow rate control valves provided in each of the branch pipes.

The opening amounts of the plurality of flow rate control valves for the corresponding manifolds are independently controlled to decrease the deviations of slurry loading along the width direction of the electrodes in which the plurality of slits are in line.

In one embodiment of the present disclosure, the plurality of flow rate control valves may independently control each opening amount for the plurality of manifolds such that the slurry flow rate is symmetrical based on the center of the plurality of slits in line.

In addition, the plurality of flow rate control valves may perform a largest or smallest opening amount control for the manifold located in the center among the plurality of manifolds.

Further, the first body may be provided with a plurality of fixing pins at mounting positions of the spacer shim, and the spacer shim may be formed with a plurality of holes into which the fixing pins are inserted.

Further, the spacer shim may be provided with an insulating liquid supply hole in which an insulating liquid is supplied, and a groove connected with the insulating liquid supply hole and extending to a front end of the spacer shim.

### [Advantageous Effects]

The slot die of the present disclosure having the above configuration is provided with a plurality of manifolds connected to a plurality of slits, thereby enabling the flow rate of the electrode slurry supplied to each manifold to be adjusted differently. Since the discharge amount of the electrode slurry can be controlled independently for a group of slits allocated to each manifold, it becomes possible to adjust the coating loading amount and the deviation of the coating width occurring along the width direction of the current collector, thereby improving the quality of the secondary battery.

Further, the slot die of the present disclosure is provided with a plurality of fixing pins in the first body in accordance with the mounting position of the spacer shim, and a plurality of holes are formed in the spacer shim into which the fixing pins are inserted. By such a configuration of the pins and holes, the spacer shim can be installed consistently without any impact by the operator, thereby solving the problem of the deviation of the coating loading and the coating width due to deviation of the installation of the spacer shim.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIGS. 1 and 2 are drawings illustrating an example of a slot die according to the conventional art.
FIG. 3 is an exploded view illustrating a first body and a second body of a slot die according to one embodiment of the present disclosure.
FIG. 4 is a plan view illustrating the mounting of a coater shim to the first body.
FIG. 5 is a drawing illustrating a slot die including a slurry pipe in one embodiment.
FIG. 6 is a drawing illustrating an exemplary slurry loading profile according to an opening amount of each flow rate control valve for three manifolds.
FIG. 7 is a drawing illustrating a structure for mounting a spacer shim to a first body in one embodiment.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. **In** addition, in the present application, "on" may include not only a case of being disposed on an upper portion but also a case of being disposed on a lower portion.

The present disclosure relates to a slot die, in one example, which includes a first body having a plurality of manifolds divided to independently accommodate an electrode slurry in isolation from each other, a second body engaged to the first body to maintain a pressurized sealing of the plurality of manifolds, and a coater shim tightly interposed between the first body and the second body to form a plurality of slits in communication with the plurality of manifolds between the coupling surfaces of the first body and the second body.

Accordingly, the slot die of the present disclosure is provided with a plurality of manifolds connected to a plurality of slits, thereby enabling the flow rate of the electrode slurry supplied to each manifold to be adjusted differently. Since the discharge amount of the electrode slurry can be controlled independently for a group of slits allocated to each manifold, it becomes possible to adjust the coating loading amount and the deviation of the coating width occurring along the width direction of the current collector, thereby improving the quality of the secondary battery.

### [Detailed Description]

Hereinafter, specific embodiments of a slot die 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

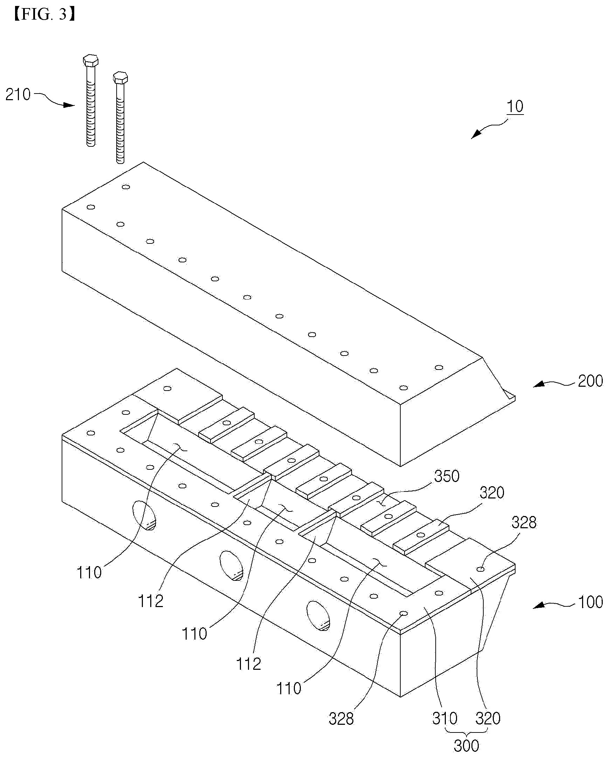

FIG. 3 is an exploded view illustrating a first body 100 and a second body 200 of a slot die 10 according to one embodiment of the present disclosure. Referring to FIG. 3, a slot die 10 of the present disclosure includes a first body 100 and a second body 200 that are engaged with each other, and a coater shim 300 interposed between the first body 100 and the second body 200.

The first body 100, as a lower block of the slot die 10, is provided with a manifold 110 accommodating an electrode slurry supplied from outside. Particularly, in the slot die 10 of the present disclosure, the manifold 110 provided in the first body 100 comprises a plurality of manifolds 110 divided by a partition wall 112, each manifold 110 independently accommodating the electrode slurry in isolation from each other. In other words, the electrode slurry accommodated in each manifold 110 cannot move to the other adjacent manifolds 110.

The second body 200, as the upper block of the slot die 10, is engaged to the first body 100 such that the plurality of manifolds 110 provided in the first body 100 maintain a pressurized sealing. For example, by a plurality of bolts 210 that penetrate the second body 200 and are screwed to the first body 100, the first and second bodies 100, 200 may be rigidly coupled to each other.

A coater shim 300 is tightly interposed between the first body 100 and the second body 200, forming a plurality of slits 350 at the front end of the slot die 10 (wherein the front end refers to the end from which the electrode slurry is discharged). The coater shim 300 adhered between the coupling surfaces of the first and second bodies 100, 200 being engaged has a predetermined thickness, and the coater shim 300 dividedly disposed at the front end of the slot die 10 forms a plurality of slits 350. Each slit 350 forms one lane in which the electrode slurry is discharged in line on the surface of the current collector.

In the illustrated embodiment, the first body 100 has three plurality of manifolds 110 provided, and the coater shim 300 comprises a single base shim 310 and a plurality of spacer shims 320. The base shim 310 seals the rear end and both side surfaces of the plurality of manifolds 110, and the plurality of spacer shims 320 are disposed spaced apart in the front end of the plurality of manifolds 110 to form a plurality of slits 350. According to such embodiment, the base shim 310 only serves to seal the rear end and both side surfaces of the manifold 110, and substantially only the spacer shims 320 are involved in forming the slits 350. Accordingly, according to an embodiment in which the coater shim 300 is divided into a base shim 310 and a plurality of spacer shims 320, only the corresponding spacer shim 320 having a problem with slurry loading control can be replaced and adjusted, thereby allowing for localized loading control and reducing the cost, time, etc. associated with changing the coater shim 300.

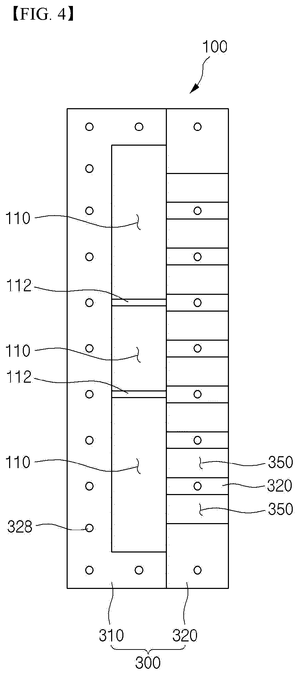

FIG. 4 is a plan view illustrating the mounting of a coater shim 300 to the first body 100. FIG. 4 illustrates the relation between the manifolds 110 and the coater shims 300, and in particular, the relation between the plurality of manifolds 110 and the plurality of spacer shims 320. As illustrated, a plurality of slits 350 are allocated to each manifold 110 to be in communication with any one of the plurality of manifolds 110. In other words, at least one or more slits 350 are connected to each manifold 110. One slit 350 is connected to only one manifold 110, and a plurality of slits 350 may be connected to one manifold 110, as shown.

If the plurality of slits 350 sharing any one manifold 110 is referred to as a group of slits 350, then the plurality of slits 350 is distinguished as three groups of slits 350, as the illustrated embodiment comprises three manifolds 110. Since the plurality of manifolds 110 are completely separated from each other, it is possible to adjust the flow rate of the electrode slurry supplied to each manifold 110 differently, and as a result, it is possible to independently control the discharge amount of the electrode slurry to each of the group of slits 350 allocated to each manifold 110. By controlling the slurry discharge amount for each of the group of slits 350, it becomes possible to adjust the coating loading amount and the deviation of the coating width that occurs along the width direction of the current collector, thereby improving the quality of the secondary battery.

Here, in order to ensure that one slit 350 is connected to only one manifold 110, it is necessary to consider partition walls 112 that divide the plurality of manifolds 110. In other words, some of the plurality of spacer shims 320 need to be disposed corresponding to at least one or more partition walls 112 that isolate the plurality of manifolds 110 from each other. The width of the spacer shims 320 is designed to be at least as thick as the thickness of the partition walls 112. Accordingly, once the spacer shim 320 is mounted to face the partition wall 112, each of the both sides of the spacer shim 320 contacts a different manifold 110, and consequently, the two slits 350 located on both sides of the spacer shim 320 are connected to different manifolds 110.

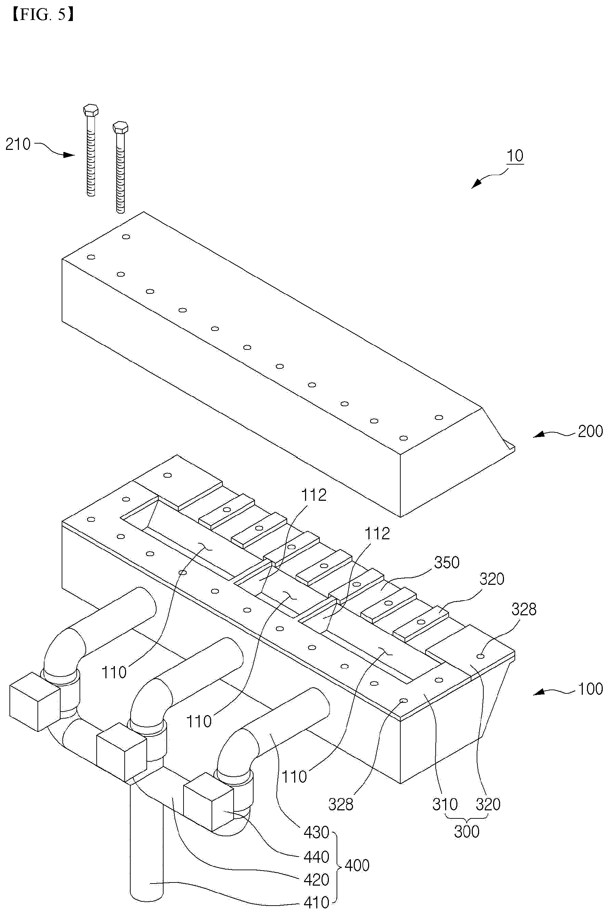

FIG. 5 is a drawing illustrating a slot die 10 including a slurry pipe 400 in one embodiment. The slurry pipe 400 is a pipe that supplies slurry to the plurality of manifolds 110, and in the illustrated embodiment, the slurry pipe 400 includes a main pipe 410, a buffer pipe 420, a plurality of branch pipes 430, and a plurality of flow rate control valves 440.

The main pipe 410 may be a single pipe, and the electrode slurry is supplied from outside through the main pipe 410, and a buffer pipe 420 is connected to the outlet of the main pipe 410. The buffer pipe 420 serves to accommodate a predetermined volume of the electrode slurry supplied from the main pipe 410, and the amplitude and intensity of variations of the slurry flow occurring in the slot die 10 are buffered by the buffer pipe 420. Further, the buffer pipe 420 is connected to a plurality of branch pipes 430, one allocated to each of the plurality of manifolds 110, and a flow rate control valve 440 is installed in each of the branch pipes 430. In other words, there is one branch pipe 430 and a flow rate control valve 440 for each manifold 110, and the flow rate of the electrode slurry is controlled by the opening amount of the flow rate control valve 440. For reference, the drawings do not illustrate a control part for controlling the opening amount of the flow rate control valve 440, and the configuration of the control part for controlling the opening amount of the valve belongs to the scope of the art, and thus the omission of illustration and description thereof will not hinder the understanding of the present disclosure.

The opening amounts of the plurality of flow rate control valves 440 for the corresponding manifolds 110 are controlled independently so that the deviation of the slurry loading along the width direction of the electrodes in which the plurality of slits 350 are in line is reduced. In other words, if there is a difference in the slurry loading amount for each of the group of slits 350 allocated to each manifold, the opening amount of the flow rate control valve 440 installed in each manifold 110 can be controlled differently in consideration of such a deviation, so that uniform slurry loading is achieved along the overall width of the electrodes.

In general, the design of the slot die 10, specifically the arrangement of the slurry pipe 400, the pressurized engagement structure of the first body 100 and the second body 200, and the like, is made to be symmetrical based on the center of the width direction of the slot die 10. Accordingly, in many cases, the profile of the slurry loading is substantially symmetrical based on the center of the width direction of the slot die 10. In consideration of such phenomenon, the plurality of flow rate control valves 440, for the plurality of manifolds 110, may each independently control an opening amount such that the slurry flow rate is symmetrical based on the center of the plurality of slits 350 in line. For example, the plurality of flow rate control valves 440 may perform a largest or smallest opening amount control for the manifold 110 located in the center of the plurality of manifolds 110.

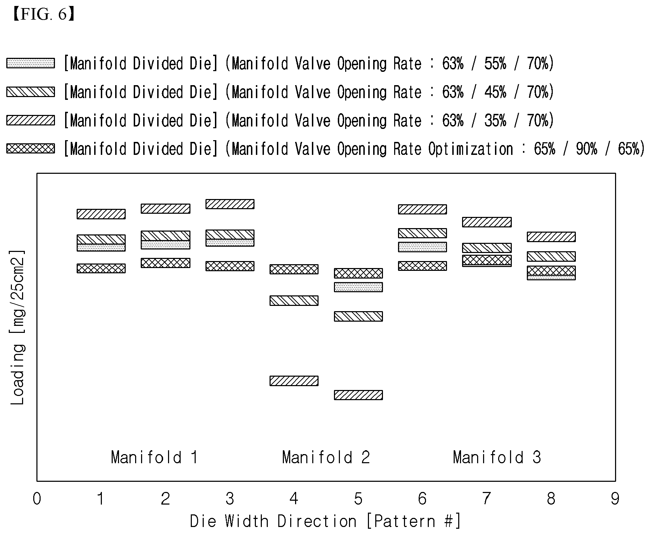

FIG. 6 is a drawing illustrating an exemplary slurry loading profile according to an opening amount of each flow rate control valve 440 for three manifolds 110. As shown in the actual data illustrated in FIG. 6, an optimal opening amount indicated in allows for the largest opening amount of the flow rate control valve 440 for the center manifold among the three manifolds 110, with smaller opening amounts for the manifolds 110 to the left and right thereof to be symmetrically set, thereby implementing a substantially uniform slurry loading across the overall width of the slot die 10.

Of note, while the plurality of manifolds 110 is illustrated herein as an embodiment of a three-divided manifold, it will be understood that the slot die 10 of the present disclosure may be implemented in a variety of embodiments including a plurality of manifolds 110 that are two-divided, four-divided, or more.

### [second embodiment]

In a first embodiment, a configuration has been described that enables uniform slurry loading along the width direction of the slot die 10 by optimization of the opening amount of the plurality of flow rate control valves 440 allocated to the plurality of divided manifolds 110.

Further, in one embodiment of the present disclosure, the coater shim 300 may comprise a divided structure of a base shim 310 and a plurality of spacer shims 320, such that only the problematic spacer shim 320 can be replaced and adjusted by such a divided structure of the coater shim 300, thereby enabling localized slurry loading control and reducing the cost, time, and the like associated with changing the coater shim 300.

However, as the coater shim 300 forms a divided structure, the installation of the spacer shim 320, which is directly involved in slurry loading, is critical, and deviations in the installation of the spacer shim 320 may occur by different operators. Since the deviation of the installation of the spacer shim 320 soon leads to the deviation of the slurry loading, there is a need to solve the problem of the installation deviation of the spacer shim 320 together with the optimization of the opening amount of the flow rate control valve 440, and the second embodiment of the present disclosure relates to a structure that enables the installation of the spacer shim 320 to be consistent without the influence of the operator.

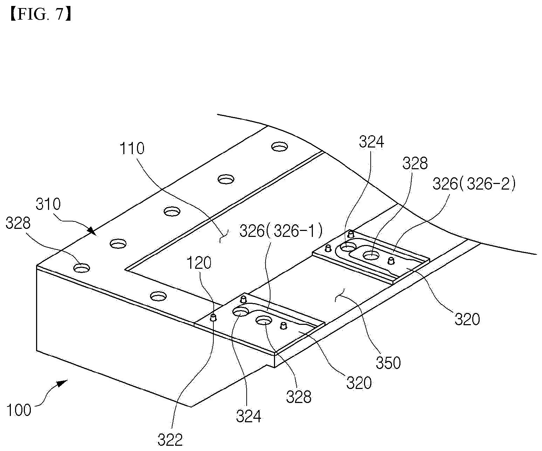

FIG. 7 is a drawing illustrating a structure for mounting a spacer shim 320 to a first body 100 in one embodiment. Referring to FIG. 7, the first body 100 is provided with a plurality of fixing pins 120 at mounting positions of the spacer shim 320, and the spacer shim 320 is formed with a plurality of holes 322 into which the fixing pins 120 are inserted.

The fixing pins 120 are provided with at least two or more, and in the illustrated embodiment are provided with three, and it is preferable to dispose the plurality of fixing pins 120 in this manner, to ensure that when the spacer shim 320 is mounted, it can remain in the mounted position without rotating, and that the mounting direction, either front to back or up and down, is only in one direction.

In addition, referring to FIG. 7, the end of the fixing pin 120 protrudes slightly above the hole 322 of the spacer shim 320, and by making the height of the fixing pin 120 slightly larger than the thickness of the spacer shim 320, the coupling surface of the second body 200 may also be provided with a shallow hole (not shown) into which the end of the fixing pin 120 will be inserted. In this case, the fixing pin 120 will serve to align the engagement position of the second body 200 with respect to the first body 100.

Depending on the embodiment, the slot die 10 may be configured to discharge an insulating liquid along with the electrode slurry. For this, as shown in FIG. 7, the spacer shim 320 comprises an insulating liquid supply hole 324 through which the insulating liquid is supplied, and a groove 326 connected to the insulating liquid supply hole 324 and extending to a front end of the spacer shim 320. The terminal of the groove 326 extending from the insulating liquid supply hole 324 is opened. Thus, the electrode slurry is discharged through the slit 350 formed between the plurality of spacer shims 320, meanwhile, the insulating liquid is discharged adjacent to the edge of the electrode slurry. By applying the insulating liquid to both sides of the electrode slurry, the sliding phenomenon at the edge of the electrode slurry is controlled, and the insulating performance is improved.

The grooves 326 provided in the spacer shim 320 may be straight or U-shaped. The straight grooves 326-1 may be provided one by one on the spacer shims 320 on the outermost side in the width direction of the slot coater, while the other spacer shims 320 may be provided with U-shaped grooves 326-2. This relates to whether the slits 350 are disposed on one side or both sides of the spacer shim 320 in the width direction.

To the insulating liquid supply hole 324 of the spacer shim 320, insulating liquid is supplied through an insulating liquid flow path (not shown) formed in the interior of the first body 100 or the second body 200. In addition, a bolt hole 328 may be formed in the spacer shim 320 through which the bolt 210 passes. The first body 100 and the second body 200 may be engaged with each other by binding a plurality of bolts 210 through the first body 100 to the second body 200, wherein some of the bolts 210 may penetrate the spacer shim 320. By having the spacer shim 320 positioned at a point where the engaged bolts 210 apply pressure, the strength of adhering the upper and lower surfaces of the spacer shim 320 to the second body 200 and the first body 100 is improved, and accordingly, the electrode slurry and the insulating liquid are effectively prevented from leaking or mixing through the coupling surfaces of the first body 100 and the second body 200.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: slot die
100: first body
110: manifold
112: partition wall
120: fixing pin
200: second body
210: bolt
300: coater shim
310: base shim
320: spacer shim
322: hole
324: insulating liquid supply hole
326: groove
326-1: straight groove
326-2: U-shaped groove
328: bolt hole
350: slit
400: slurry pipe
410: main pipe
420: buffer pipe
430: branch pipe
440: flow rate control valve

## Claims

1. A slot die, comprising:
a first body having a plurality of manifolds divided in isolation from each other so as to independently accommodate an electrode slurry;
a second body engaged to the first body to maintain a pressurized sealing of the plurality of manifolds; and
a coater shim interposed between coupling surfaces of the first body and the second body to form a plurality of slits in communication with the plurality of manifolds.

2. The slot die of claim 1, wherein the plurality of slits are disposed to be in communication with any one manifold of the plurality of manifolds.

3. The slot die of claim 2, wherein the coater shim comprises:
a base shim sealing rear ends and opposing sides of the plurality of manifolds; and
a plurality of spacer shims disposed spaced apart from each other to define the plurality of slits in front ends of the plurality of manifolds.

4. The slot die of claim 3, wherein some of the plurality of spacer shims is disposed adjacent to at least one or more partition walls isolating the plurality of manifolds from each other.

5. The slot die of claim 1, wherein the slot die further comprises a slurry pipe configured to supply slurry to the plurality of manifolds,
wherein the slurry pipe comprises:
a main pipe comprising a single pipe;
a buffer pipe configured to accommodate a predetermined volume of the electrode slurry supplied from the main pipe;
a plurality of branch pipes branched and connected from the buffer pipe to a number of the plurality of manifolds, respectively; and
a plurality of flow rate control valves provided in each of the branch pipes.

6. The slot die of claim 5, wherein opening amounts of the plurality of flow rate control valves for the respective ones of the plurality of manifolds are configured to be independently controlled, so as to decrease deviations of the electrode slurry loading along a width direction of electrodes in which the plurality of slits extend.

7. The slot die of claim 6, wherein the plurality of flow rate control valves are configured to independently control each opening amount of the plurality of manifolds such that a slurry flow rate is symmetrical based on a center of the plurality of slits extending in the width direction.

8. The slot die of claim 7, wherein the plurality of flow rate control valves are configured to perform a largest or a smallest opening amount control for a manifold located in a center among the plurality of manifolds along the width direction.

9. The slot die of claim 3, wherein the first body is provided with a plurality of fixing pins at mounting positions of the spacer shim, and
the spacer shim includes a plurality of holes into which the fixing pins are configured to be inserted.

10. The slot die of claim 3, wherein the spacer shim is provided with an insulating liquid supply hole in which an insulating liquid is configured to be supplied, and a groove connected with the insulating liquid supply hole and extending to a front end of the spacer shim
